# EUROPÄISCHE PATENTSCHRIFT

(11) **EP 0 914 881 B1**
(45) Veröffentlichungstag und Bekanntmachung des Hinweises auf die Patenterteilung: **10.01.2001**
(21) Anmeldenummer: 97116208.6
(22) Anmeldetag: 18.09.1997
(51) Int. Cl.: B21F 35/00, F16F 1/04

(54) **Verfahren und Vorrichtung zur Herstellung einer Druckfeder**
Method and device for the manufacture of a compression spring
Procédé et dispositif pour la fabrication d'un ressort de compression

(43) Veröffentlichungstag der Anmeldung: 12.05.1999
(73) Patentinhaber: Société Alsacienne pour la Transformation de l'Acier S.a.r.l., 67590 Schweighouse sur Moder (FR)
(72) Erfinder: Schroer, Bernt, 33442 Herzebrock-Clarholz (DE)
(74) Vertreter: Patentanwälte Rehberg + Hüppe

(56) Entgegenhaltungen:
- EP-A- 0 313 324
- DE-A- 19 544 365
- DE-C- 4 306 895
- US-A- 5 642 875

## Beschreibung

Die Erfindung bezieht sich auf ein Verfahren zur Herstellung einer spiralförmigen Druckfeder nach dem Oberbegriff des Anspruchs 1 und eine Vorrichtung für die Herstellung einer spiralförmigen Druckfeder nach dem Oberbegriff des Anspruchs 4.

Im einzelnen geht es bei der Erfindung darum, die Eigenschaften von auf ihr Blockmaß zusammengedrückten spiralförmigen Druckfedern zu verbessern. Dabei ist es grundsätzlich bekannt, den Draht, aus dem eine spiralförmige Druckfeder besteht, kontinuierlich mit bezüglich seiner Drahtachse gegenüberliegenden Abflachungen zu versehen. Über diese Abflachungen sollen sich benachbarte Federwindungen bei der auf ihr Blockmaß zusammengedrückten Druckfeder flächig aneinander abstützen.

Auch wenn im folgenden konkret auf das Winden der neuen Druckfeder abgestellt wird, bezieht sich die Erfindung auch auf die Herstellung gewickelter Druckfedern.

Aus der DE 43 06 895 C1 ist ein Verfahren zur Herstellung einer spiralförmigen Druckfeder nach dem Oberbegriff des Anspruchs 1 bekannt. Das Verfahren wird mit einer Vorrichtung nach dem Oberbegriff des Anspruchs 4 ausgeführt, wobei davon ausgegangen ist, daß im wesentlichen eine übliche Wickel- bzw. Windeeinrichtung zum Einsatz kommt, die mit einer Steuerung verstellbar ist, so daß auch bei der Herstellung einer einzelnen Druckfeder unterschiedliche Steigungen entlang deren Federachse einstellbar sind. Bei dem bekannten Verfahren wird der Draht mittels motorisch angetriebener Drahtvorschubwalzen weitestgehend schlupffrei vorgeschoben, so daß die von den Drahtvorschubwalzen berührten Umfangsbereiche des Drahts eine vorgegebene Lage an der fertigen Druckfeder einnehmen. Gleichzeitig sollen Prägewerkzeuge, die den Draht mit den Abflachungen versehen, so nahe an den Drahtvorschubwalzen und der Windeeinrichtung angeordnet sein, daß die von den Prägewerkzeugen am Draht bewirkten Abflachungen eine genau vorgegebene Lage an der fertigen Feder haben. Auf diese Weise wird die Winkellage der Abflachungen des Drahtes beispielsweise zur Federachse der Druckfeder zwar festgelegt, sie ist aber nicht optimierbar. Konkret sollten die Abflachungen bei der auf ihr Blockmaß zusammengedrückten Druckfeder immer senkrecht zu der Federachse ausgerichtet sein, damit aus den wechselseitigen Abstützungskräften, die über die Abflachungen zwischen den einzelnen Federwindungen wirken, keine radialen Kräfte resultieren, die zu einer radialen Verformung der Druckfeder führen könnten. Bei fester Relativlage der Abflachungen beim Eintreten des Drahts in die Windeeinrichtung ist die optimale Ausrichtung der Abflachungen zur Federachse bei der auf Ihr Blockmaß zusammengedrückten Druckfeder nur für eine Steigung der Druckfeder erreichbar. Bei allen anderen Steigungen weisen die Abflachungen zur Federachse immer Winkelfehler auf. Aus diesen Winkelfehlern resultieren radiale Beanspruchungen und Verformungen der auf ihr Blockmaß zusammengedrückten Druckfeder. Weiterhin ist bei dem bekannten Verfahren nachteilig, daß die weitestgehend schlupffreie Führung des abgeflachten Drahts durch die Drahtvorschubwalzen nicht oder nur mit extremen Aufwand tatsächlich realisierbar ist.

Das letztgenannte Problem ist auch von der Anmelderin der DE 43 06 895 C1 erkannt und in der jüngeren DE 195 44 365 A1 beschrieben worden. Diese Druckschrift betrifft eine spiralförmige Druckfeder und ein Verfahren zu deren Herstellung. Konkret handelt es sich um eine sogenannte Bogenfeder mit im positionierten bzw. belasteten Zustand bogenförmig verlaufender Federachse. Zur Herstellung der bekannten Bogenfeder wird ein Draht nicht kontinuierlich mit Abflachungen versehen. Vielmehr werden erst nach dem Winden der Druckfeder lokale Abflachungen des Drahtes vorgenommen. Dabei sind die Abflachungen örtlich auf die Bereiche beschränkt, über die benachbarte Federwindungen der Bogenfeder aneinander zur Anlage kommen, d. h. auf die Seite am Innenradius der Bogenfeder. Dieses Vorgehen ist extrem aufwendig. Insbesondere erfordert das definierte Anbringen der Abflachungen an der fertig gewundenen Druckfeder einen erheblichen apparativen Aufwand. Das Problem, welches bei unterschiedlichen Steigungen einer Druckfeder bezüglich der Positionierung der Abflachungen zur Federachse auftritt, ist in der DE 195 44 365 A1 nicht angesprochen. Vielmehr sollen die Abflachungen nur im Bereich der Hauptsteigung der beschriebenen Bogenfeder angebracht werden, während in den axialen Endabschnitten auf die Abflachungen verzichtet werden soll, da dort durch Aufnahmezapfen bereits eine ausreichende radiale Führung gegeben sei. Offensichtlich ist das nachträgliche Anbringen der Abflachungen in den typischerweise mit geringerer Steigung gewundenen Endabschnitten der Druckfeder nach dem aus der DE 195 44 365 A1 bekannten Verfahren also nicht praktikabel. Hinzu kommt, daß bei diesem Verfahren vorzugsweise ein abtragender Bearbeitungsvorgang durchgeführt werden soll, um die Abflachungen anzubringen. Hierdurch wird die Oberfläche des Drahts, die dieser bei seiner eigenen Herstellung erhalten hat, entfernt. Die neue Oberfläche weist nicht dieselben Qualitäten auf und wird einen zusätzlichen Behandlungsschritt erfordern, damit die an eine Bogenfeder unter Dauerbelastung gestellten Anforderung erfüllt werden.

Aus der DE 42 29 294 C1 ist eine Vorrichtung zum Formen von Draht, insbesondere zum Herstellen von Schenkelfedern bekannt. Bei dieser Vorrichtung ist eine Drahtvorschubeinrichtung zusammen mit einer Drahtführungseinrichtung, die sogenannte Drahtführungspatronen aufweist, relativ zu Verformwerkzeugen zur Ausbildung der Schenkelfedern um die Drahtachse verschwenkbar. Auf diese Weise wird ein weiterer Freiheitsgrad beim Formen des Drahts zu den Schenkelfedern gewonnen. Die DE 42 29 294 C1 beschreibt keine Vorrichtung zum Wickeln oder Winden von spiralförmigen Druckfedern und befaßt sich nicht mit irgendwelchen senkrecht zur Drahtachse angebrachten Abflachungen des Drahts.

Ein Verfahren zur Herstellung einer spiralförmigen Druckfeder nach dem Oberbegriff des Anspruchs 1 und eine entsprechende Druckfeder sind auch aus der US 5 642 875 A bekannt. Dabei beschreibt dieses Dokument vornehmlich eine Bogenfeder, bei der die Abflachungen senkrecht zu der gekrümmten Federachse ausgerichtet sind. In einer bevorzugten Ausführungsform werden die Abflachungen so ausgebildet, daß die Oberfläche des Drahts in ihrem Bereich nach innen konvex gekrümmt ist, um den Draht einer benachbarten Federwindung mit rundem Querschnitt eine Führung in Richtung senkrecht zu der Federachse zu geben. Das Problem, welches bei unterschiedlichen Steigungen einer Druckfeder bezüglich der Positionierung der Abflachungen zur Federachse auftritt, ist auch in der US 5 642 875 A nicht angesprochen.

Aus der EP 0 313 324 A1 ist ein Verfahren zur Herstellung einer spiralförmigen Druckfeder aus einem Draht mit nicht-rundem Querschnitt bekannt. Dabei wird der Draht so gewunden, daß ein Hauptdruchmesser des Querschnitts in einer Richtung ausgerichtet ist, die sich mit der Federachse der Feder schneidet. Weiterhin wird derart Torsion auf mindestens einen Teil des Drahts aufgebracht, daß die Innenseite des Drahts bei der Druckfeder leicht nach außen zu dem jeweiligen Federende hin verdreht ist. Bei einer Druckfeder mit unterschiedlichen Steigungen soll ein größerer Torsionswinkel bei größerer Steigung und ein kleinerer Torsionswinkel bei kleinerer Steigung eingestellt werden. Beim Aufbringen einer Last auf die Druckfeder richtet sich dann der bereits angesprochene Hauptdurchmesser des Drahts senkrecht zur Federachse aus. Hierdurch werden Scherkräfte auf den Draht der Druckfeder besonders gut aufgenommen. Wie unterschiedliche Torsionswinkel bei der Herstellung einer solchen Druckfeder tatsächlich realisiert werden können, ist in der EP 0 313 324 A1 nicht beschrieben. Beschrieben wird nur das Aufbringen eines festen Torsionswinkels mit Drahtzuführwalzen, in denen auf den Querschnitt des Drahts abgestimmte Formnuten in einer festen Relativanordnung vorgesehen sind.

Der Erfindung liegt die Aufgabe zugrunde, das Verhalten von auf ihr Blockmaß zusammengedrückten spiralförmigen Druckfedern, einschließlich Bogenfedern, zu optimieren.

Diese Aufgabe wird erfindungsgemäß durch das Verfahren zur Herstellung einer spiralförmigen Druckfeder nach Anspruch 1 und die Vorrichtung für die Herstellung einer spiralförmigen Druckfeder nach Anspruch 4 gelöst. Vorteilhafte Ausführungsformen des Verfahrens und der Vorrichtung sind in den Unteransprüchen dargelegt.

Die Optimierung der Eigenschaften der auf ihr Blockmaß zusammengedrückten Druckfeder wird dadurch erreicht, daß die Abflachungen im Anlagebereich von benachbarten Federwindungen unabhängig von den ursprünglichen Steigungen und bis auf die verbleibende Blocksteigung der Druckfeder senkrecht zu der Federachse ausgerichtet sind. Die senkrechte Ausrichtung der Abflachungen zu der Federachse beschränken sich damit nicht beispielsweise auf den Bereich der Hauptsteigung der Druckfeder, sondern findet sich auch beispielsweise an mit geringerer Steigung gewickelten bzw. gewundenen Endwindungen der Druckfeder. Selbst wenn hier eine radiale Führung durch einen Aufnahmezapfen gegeben ist, so treten ohne die exakte Ausrichtung der Abflachungen senkrecht zur Federachse radiale Resultierende aus den die Druckfeder axial zusammendrückenden Kräften auf, die die Druckfeder radial verformen und zu Beschädigungen der Druckfeder oder beispielsweise eines sie aufnehmenden Gehäuses führen können.

Im Vergleich zu der aus der DE 195 44 365 A1 bekannten Druckfeder ist die nach dem erfindungsgemäßen Verfahren bzw. mit der erfindungsgemäßen Vorrichtung hergestellte neue Druckfeder auch deshalb in viel stärkerem Maße belastbar, weil bei ihr die Abflachungen in herkömmlicher Weise durch Kaltverformung angebracht werden und so eine verdichtete und besonders belastbare Oberfläche aufweisen. Zudem kommen auch in den Endabschnitten der Druckfeder die einzelnen Federwindungen großflächig über die Abflachungen aneinander zur Anlage, so daß die auftretenden Andruckkräfte in günstiger Weise verteilt werden.

Die senkrechte Ausrichtung der Abflachungen im Anlagebereich von benachbarten Federwindungen ist unabhängig von den ursprünglichen Steigungen der Druckfeder nur dann zu erreichen, wenn die Lage der Abflachungen um die Drahtachse relativ zu der Wickel-bzw. Windeeinrichtung beim Ändern der Steigung der Druckfeder ebenfalls geändert wird. Zu diesem Zweck können die Prägeeinrichtung, die Drahtvorschubeinrichtung und die Drahtführungseinrichtung als eine erste Drahtbearbeitungseinheit gemeinsam gegenüber dem Rahmen der gesamten Vorrichtung verschwenkbar sein, alternativ oder zusätzlich ist es möglich, die Wickel-bzw. Windeeinrichtung als eine zweite Drahtbearbeitungseinheit gegenüber diesem Rahmen um die Drahtachse des Ihr zugeführten Drahts zu verschwenken. In jedem Fall ergibt sich die geforderte relative Verschwenkung zwischen der Prägeeinrichtung, der Drahtvorschubeinrichtung und der Drahtführungseinrichtung einerseits und der Wickel- bzw. Windeeinrichtung andererseits. Dabei ist die Steuerung der Vorrichtung für ein Koordinieren der unterschiedlichen Steigungen der Druckfeder mit der Lage der Abflachungen um die Drahtachse relativ zu der Wickel- bzw. Windeeinrichtung vorgesehen.

Im Normalfall ist es ausreichend, wenn diese Abstimmung mit der Steuerung so durchgeführt wird, daß die Abflachungen bei der fertigen Druckfeder senkrecht zu der Federachse verlaufen. Dann wird bereits recht genau die senkrechte Ausrichtung der Abflachungen zu der Federachse auch bei der auf Ihr Blockmaß zusammengedrückten Druckfeder erreicht. Die bestmöglichen Eigenschaften der Druckfeder werden aber nur erhalten, wenn die Steuerung dafür Sorge trägt, daß die Abflachungen bei der auf ihr Blockmaß zusammengedrückten Druckfeder exakt senkrecht zu der Federachse verlaufen. Hierzu sind zusätzlich beim Zusammendrücken der Druckfeder auftretende Schwenkbewegungen der Abflachungen um die Drahtachse zu berücksichtigen.

Die Erfindung ist sowohl auf gerade Druckfedern als auch auf Bogenfedern anwendbar. Auch bei der gekrümmten Federachse von Bogenfedern ist die erfindungsgemäße Definition der Ausrichtung der Abflachungen bei der auf ihr Blockmaß zusammengedrückten Druckfeder eindeutig.

Die Abflachungen, mit denen der Draht bei der Herstellung der neuen Druckfeder versehen wird, müssen nicht umbedingt vollständig eben sein, obwohl dies die Grundform der Erfindung ist. Es ist auch zulässig, daß die Abflachungen eine Konvexe Krümmung aufweisen. Der Krümmungsradius dieser Krümmung muß dann jedoch mindestens sechsmal so groß sein wie der Außenradius des Drahtes ohne die Abflachungen. Bevorzugt ist ein etwa 7,5-mal so großer Krümmungsradius. Durch die Krümmungen ergibt sich ein besonderer Vorteil bei parallel geschalteten Druckfedern, beispielsweise bei zwei ineinander angeordneten Bogenfedern eines Zweimassenschwungrads. Die Krümmungen erlauben begrenzte plastische Verformungen der Kontaktbereiche aneinander anliegender Federwindungen, wobei das Blockmaß der jeweiligen Druckfeder abnimmt. Bei zwei parallel geschalteten Druckfedern kann sich so die bezüglich ihres Blockmaßes längere Druckfeder verkürzen, bis die Blockmaße beider Druckfedern gleich sind, wodurch beide Druckfedern zukünftig etwa gleich beansprucht werden. Diese Eigenschaft ist besonders interessant, weil gerade bei der Kombination zweier unterschiedlicher Bogenfedern eine absolute Identität der beiden Blockmaße fertigungsseitig nicht gewährleistet werden kann. Überdies erweist sich eine Druckfeder mit gekrümmten Abflachungen gegenüber Winkelfehlern der Abflachungen als weniger empfindlich. So ist es denkbar, die abgerundeten Abflachungen nicht nur als zusätzliche sondern auch als alternative Maßnahme zur Erfindung zwecks Optimierung der Eigenschaften einer auf ihr Blockmaß zusammengedrückten Druckfeder vorzusehen.

Bei der neuen Vorrichtung wird die Winkellage der Abflachungen um die Drahtachse beim Vorschieben des Drahts durch Verdrillen des Drahts um die Drahtachse geändert. Das heißt, bezogen auf den ankommenden, in der Regel runden Draht weisen die Abflachungen eine feste Lage zu der Drahtachse auf. Durch das Verdrillen des Drahts können sich Auswirkungen auf die resultierende Steigung der Druckfeder ergeben, die jedoch ohne weiteres kompensierbar sind, indem sie bei der Einstellung von Steigungswerkzeugen der Wickel- bzw. Windeeinrichtung von der Steuerung einkalkuliert werden. Dabei ist zu berücksichtigen, daß die Lageänderungen der Abflachungen um die Drahtachse relativ zu der Wickel- bzw. Windeeinrichtung bei dem neuen Verfahren und der neuen Vorrichtung auch bei stark unterschiedlichen Steigungen der Druckfeder nur gering sind.

Die Drahtführungseinrichtung der neuen Vorrichtung weist mindestens eine mit ihrer freien Durchgangsöffnung auf den Querschnitt des abgeflachten Drahts abgestimmte Drahtführungspatrone auf, aus der heraus der Draht in die Wickel- bzw. Windeeinrichtung eintritt. Vorzugsweise sind zwischen der Prägeeinrichtung und der Wickel- bzw. Windeeinrichtung noch weitere Drahtführungspatronen der Drahtführungseinrichtung vorgesehen, um die Winkellage der Abflachungen um die Drahtachse vollständig zu kontrollieren. Weitere Drahtführungspatronen können beispielsweise jeweils zwischen einzelnen Paaren von Drahtvorschubwalzen der Drahtvorschubeinrichtung angeordnet sein.

Die Prägeeinrichtung kann vier paarweise überkreuz angeordnete scheibenförmige Walzen, d. h. einen sogenannten Türkenkopf aufweisen. Eines der Paare von zwei sich bezüglich der Drahtachse gegenüberliegenden Walzen dient dabei der Kaltverformung des Drahts zum Anbringen der Abflachungen, während das andere Paar der Walzen den Draht seitlich abstützt. Beim Herstellen einer Bogenfeder, bei der die Abflachungen unter einem Winkel zueinander verlaufen, reichen drei T-förmig angeordnete Walzen aus. Hier besteht keine Neigung des Drahts in Richtung des Ursprungs des Winkels zwischen den Abflachungen auszubrechen, so daß die vierte Walze weggelassen werden kann. Die Walzen der Prägeeinrichtung können als Schleppwalzen ohne eigenen Antrieb ausgebildet sein, wodurch ihre Verstellbarkeit beispielsweise zur Einstellung unterschiedlicher Winkel zwischen den sich gegenüberliegenden Abflachungen mit einfachen konstruktiven Mitteln erreichbar ist.

Die Erfindung wird im folgenden anhand von Ausführungsbeispielen näher erläutert und beschrieben. Dabei zeigt
- Figur 1: die Vorrichtung zur Herstellung der spiralförmigen Druckfeder,
- Figur 2: eine fehlerhafte Winkellage von Abflachungen bei einer geraden Druckfeder und die entsprechende Gegenmaßnahme,
- figur 3: die korrekte Winkellage der Abflachungen bei der geraden Druckfeder gemäß Figur 2,
- Figur 4: eine weitere fehlerhafte Winkellage der Abflachungen bei der geraden Druckfeder gemäß Figur 2 und die entsprechende Gegenmaßnahme,
- figur 5: eine gerade Druckfeder mit zwei unterschiedlichen Steigungen in schematisierter Darstellung,
- Figur 6: das Abflachen des Drahts bei der Ausbildung von Abflachungen in der Vorrichtung gemäß Figur 1 für die Herstellung einer Bogenfeder,
- Figur 7: ein Detail der auf ihr Blockmaß zusammengedrückten Bogenfeder im Querschnitt,
- Figur 8: die vollständige auf ihr Blockmaß zusammengedrückte Bogenfeder,
- Figur 9: ein Detail einer auf ihr Blockmaß zusammengedrückten Bogenfeder in einer alternativen Ausführungsform mit leicht gekrümmten Abflachungen und
- Figur 10: ein Detail einer auf ihr Blockmaß zusammengedrückten Bogenfeder in der alternativen Ausführungsform mit leicht gekrümmten Abflachungen und zusätzlichem Winkelfehler der Abflachungen.

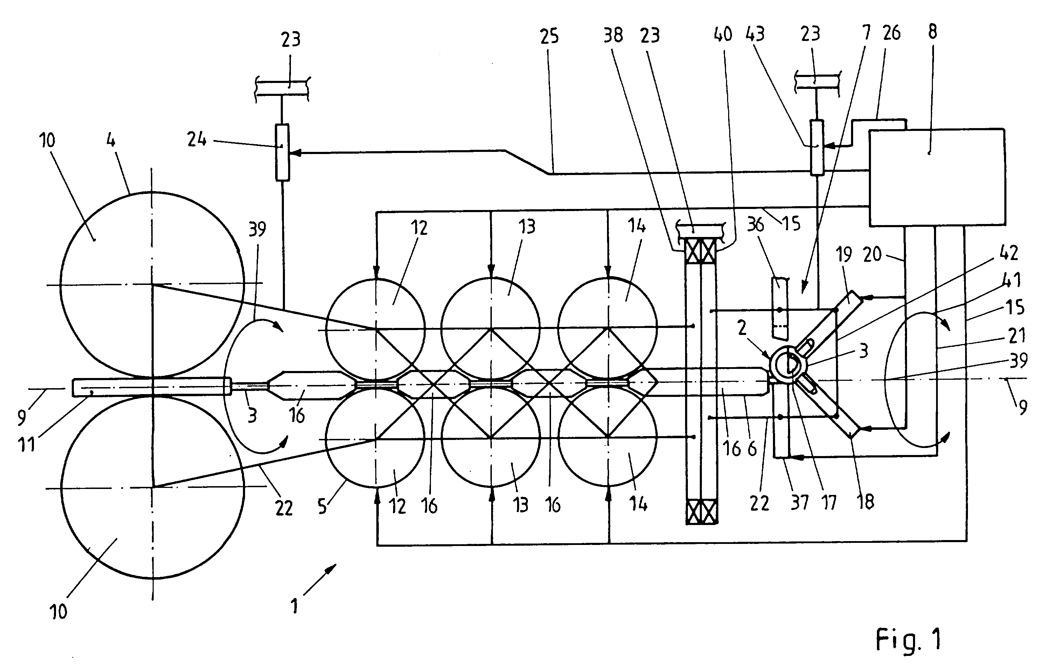

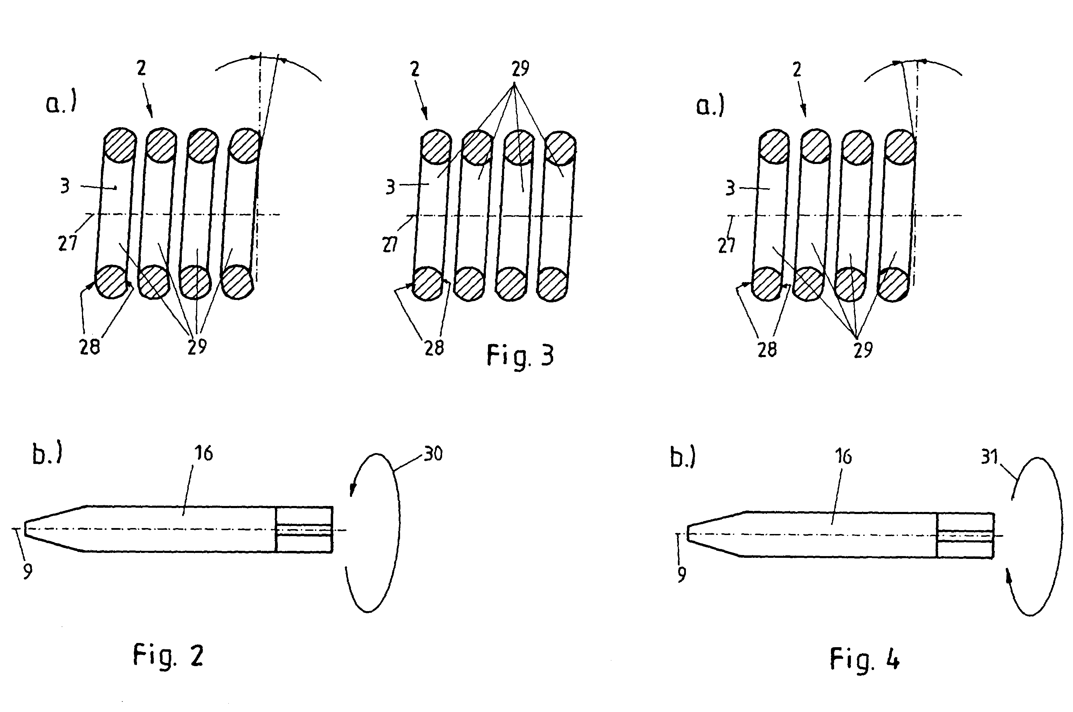

Die in Figur 1 dargestellte Vorrichtung 1 zur Herstellung einer spiralförmigen Druckfeder 2 aus einem Draht 3 weist eine Prägeeinrichtung 4, eine Drahtvorschubeinrichtung 5, eine Drahtführungseinrichtung 6, eine Windeeinrichtung 7 und eine Steuerung 8 auf. Der Draht 3 kommt beispielsweise von einer hier nicht dargestellten Haspel und wird durch die Prägeeinrichtung 4 zunächst mit zwei einander bezüglich der Drahtachse 9 gegenüberliegenden Abflachungen versehen. Dies wird anhand von Figur 6 noch näher erläutert werden. Aus Figur 1 ist entnehmbar, daß die Prägeeinrichtung 4 scheibenförmige Walzen 10 und 11 aufweist, die paarweise überkreuz angeordnet sind und keinen eigenen Antrieb besitzen, d. h. als Schleppwalzen ausgebildet sind. Der mit den Abflachungen versehene Draht 3 wird von Drahtvorschubwalzen 12 bis 14 der Drahtvorschubeinrichtung 5 in die Windeeinrichtung 7 vorgeschoben. Die Drahtvorschubwalzen 12, 13 bzw. 14 sind paarweise einander gegenüberliegend angeordnet und werden unter Kontrolle durch die Steuerung 8 angetrieben, was durch Steuersignalleitungen 15 angedeutet ist. Die Lage der Abflachungen des Drahts 3 um die Drahtachse 9 in der Drahtvorschubeinrichtung 5 durch Drahtführungspatronen 16 der Drahtführungseinrichtung 6 festgelegt. Die Drahtführungspatronen 16 weisen einen freien Querschnitt auf, der an den Querschnitt des von der Prägeeinrichtung 4 abgeflachten Drahts 3 angepaßt ist. Die Windeeinrichtung 7 umfaßt einen Abschneidedorn 17, ein Trennmesser 36, zwei Windestifte 18 und 19 und ein Steigungswerkzeug 37. Die Windestifte 18 und 19 lenken den Draht 3 um den Abschneidedorn, der als Widerlager für das Trennmesser 36 dient. Die Steigung der entstehenden Druckfeder 2 wird mit dem Steigungswerkzeug 37 festgelegt. Die Windestifte 18 und 19 und das Steigungswerkzeug 37 sind verstellbar ausgebildet, was durch Steuersignalleitungen 20 und 21 angedeutet ist, die von der Steuerung 8 kommen. Die Bestandteile der Prägeeinrichtung 4 der Drahtvorschubeinrichtung 5 und der Drahtführungseinrichtung 6 bilden eine erste Drahtbearbeitungseinheit 4 bis 6, die um die Drahtachse 9 gegenüber einem Hauptrahmen 23 der Vorrichtung 1 verschwenkbar ist. Dies ist in Figur 1 durch einen die Bestandteile der ersten Drahtbearbeitungseinheit verbindenden und in einem Schwenklager 38 gelagerten Rahmen 22 sowie einen Drehpfeil 39 angedeutet. Die eine zweite Drahtbearbeitungseinheit ausbildende Windeeinrichtung 7 ist ebenfalls um die Drahtachse 9 gegenüber dem Hauptrahmen 23 der Vorrichtung 1 verschwenkbar. Dies ist in Figur 1 durch einen die Bestandteile der zweiten Drahtbearbeitungseinheit verbindenden und in einem Schwenklager 40 gelagerten Rahmen 42 sowie einen Drehpfeil 41 angedeutet. Dabei kann mit einem Servomotor 24, der sich gelenkig an dem Hauptrahmen 23 abstützt und gelenkig den Rahmen 22 bzw. die erste Drahtbearbeitungseinheit 4 bis 6 beaufschlagt, die Lage der Abflachungen um die Drahtachse 9 relativ zu der Windeeinrichtung 7 ebenso verändert werden wie mit einem Servomotor 43, der sich ebenfalls gelenkig an dem Hauptrahmen 23 abstützt und gelenkig den Rahmen 42 bzw. die zweite Drahtbearbeitungseinheit beaufschlagt. Die Betätigung der Servomotoren 24 und 43 durch die Steuerung 8 ist in Figur 1 durch Steuersignalleitungen 25 und 26 angedeutet. Ziel der Verschwenkung der ersten und der zweiten Drahtbearbeitungseinheit relativ zu einander ist es, die Abflachungen des Drahtes 3 in einer bestimmten Winkellage zu der Federachse der entstehenden Druckfeder 2 anzuordnen. Dies wird im folgenden anhand der Figuren 2 bis 4 näher erläutert.

In Figur 2a, Figur 3 und Figur 4a ist jeweils ein Abschnitt einer geraden Druckfeder 2 mit gerader Federachse 27 im Längsschnitt wiedergegeben. Dabei sind ebene Abflachungen 28 an einander gegenüberliegenden Seiten des Drahts 3 zu erkennen. Figur 3 zeigt die gewünschte Ausrichtung der Abflachungen 28 senkrecht zu der Federachse 27. Beim Zusammendrücken der Druckfeder 2 auf ihr Blockmaß wird so erreicht, daß sich benachbarte Federwindungen 29 flächig aneinander Abstützen, ohne daß resultierende Kräfte radial zu der Federachse 27 auftreten. Die Figuren 2a und 4a zeigen hingegen Fälle, in den die Abflachungen 28 einen Winkel von minus 10 Grad bzw. plus 10 Grad zu der Federachse 27 aufweisen. Im Ergebnis werden die auf ihr Blockmaß zusammengedrückten Druckfedern 2 gemäß Figur 2a und 4a in radialer Richtung zur Federachse 24 beansprucht. Konkret werden die linken Federwindungen 29 gemäß Figur 2a radial auseinandergedrückt, während die linken Federwindungen 29 gemäß Figur 4a radial zusammengedrückt werden. Hierdurch treten unerwünschte Beanspruchungen der Druckfeder 2 auf. Weiterhin ergeben sich Durchmesseränderungen der Druckfeder 2, die beispielsweise ein die Druckfeder 2 aufnehmendes Gehäuse beschädigen können. In den Figuren 2b und 4b sind die Gegenmaßnahmen angedeutet, die zu ergreifen sind, um die Abflachungen 28 aus den dargestellten fehlerhaften Winkellagen zu der Federachse 27 in die gewünschte Winkellage gemäß Figur 3 zu überführen. Dabei ist zu berücksichtigen, daß sich in den Figuren 2a und 4a der Anfang des dargestellten Abschnitts der Druckfeder 2 jeweils rechts und das Ende jeweils links befindet. Die in den Figuren 2b und 4b in Seitenansicht dargestellte Drahtführungspatrone 16 ist so jeweils dem linken unteren Querschnitts des Abschnitts der Druckfeder 2 zugeordnet, wobei der Draht 3 von links nach rechts durch die Drahtführungspatrone 16 hindurchtritt. Bei dieser Anordnung ist die Drahtführungspatrone auf ihrer sichtbaren Vorderseite gemäß einem Drehpfeil 30 von oben nach unten zu verschwenken, um die bei Figur 2a notwendige Korrektur der Winkellage der Abflachungen 28 zu der Federachse 27 durchzuführen. Entsprechend ist die Drahtführungspatrone 16 gemäß Figur 4b an ihrer gezeigten Vorderseite gemäß dem Drehpfeil 3 von unten nach oben zu verschwenken, um den Fehler in der Winkellage der Abflachung 28 gemäß Figur 4a auszugleichen.

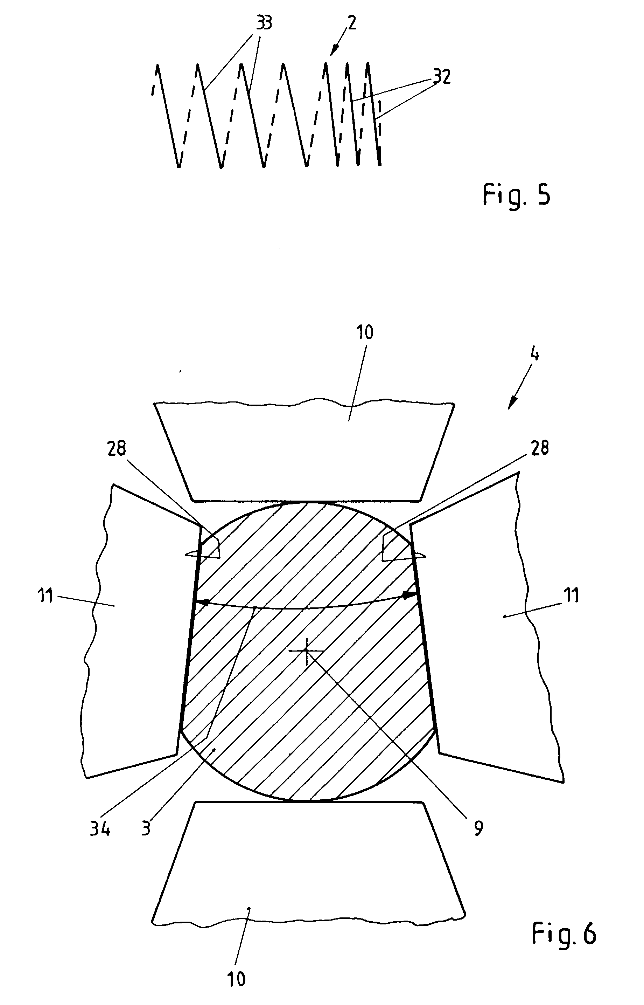

Die in den Figuren 2a und 2b angedeuteten Fehler der Relativlage der Abflachungen 28 zu der Federachse 27 treten nicht nur auf, wenn die Drahtführungseinrichtung 6 gemäß Figur 1 gegenüber der Windeeinrichtung 7 gänzlich falsch um die Drahtachse 9 eingestellt ist. Solche Fehler ergeben sich auch, wenn die Steigung der Druckfedern 2 während des Windens der Druckfeder 2 geändert wird. Eine Druckfeder 2 mit zwei unterschiedlichen Steigungen ist in Figur 5 skizziert. Bei ihren Endwindungen 32 weist die Druckfeder 2 eine geringere Steigung auf als bei ihren Mittelwindungen 33, in deren Bereich die Darstellung gemäß Figur 5 abgebrochen ist. Wenn die Druckfeder 2 gemäß Figur 5 bei fester Stellung der Servomotoren 24 und 43 gemäß Figur 1 hergestellt wird, kann die Relativlage der Abflachungen 28 senkrecht zu der Federachse 27 nur in einem der Abschnitte 32 oder 33 optimal eingestellt sein. Zum Herstellen einer Druckfeder 2, die über alle Steigungen hinweg die optimale Ausrichtung der Abflachungen 28 zu der Federachse 27 aufweist, muß mindestens einer der Servomotoren 24 und 43 bei sich ändernder Steigung der Druckfeder 2 betätigt werden. Die Betätigung der Servomotoren 24 und 43 erfolgt ergebnisabhängig so, daß bei der auf ihr Blockmaß zusammengedrückten Druckfeder 2 die Abflachungen 28 im Bereich der gegenseitigen Anlage benachbarter Federwindungen 29 bis auf die verbleibende Reststeigung der Druckfeder 2 senkrecht zu ihrer Federachse 27 verlaufen.

Figur 6 gibt vergrößert wieder, wie das Walzgerüst, d. h. die Walzen 10 und 11 der Prägeeinrichtung 4 an dem Draht 3 angreifen, um die Abflachungen 28 durch Kaltverformung anzubringen. Dabei sind die Abflachungen 28 gemäß Figur 6 unter einem Winkel 34 angeordnet und damit für die Herstellung einer Bogenfeder mit gekrümmter Federachse 27 vorgesehen. Bei parallel zueinander verlaufenden Abflachungen, wie sie beispielsweise bei Druckfedern 2 mit gerader Federachse 27 vorgesehen sein können, sind aber alle vier paarweise überkreuz angeordneten scheibenförmigen Walzen 10 und 11 sinnvoll, um den Draht 3 vollständig zu kontrollieren.

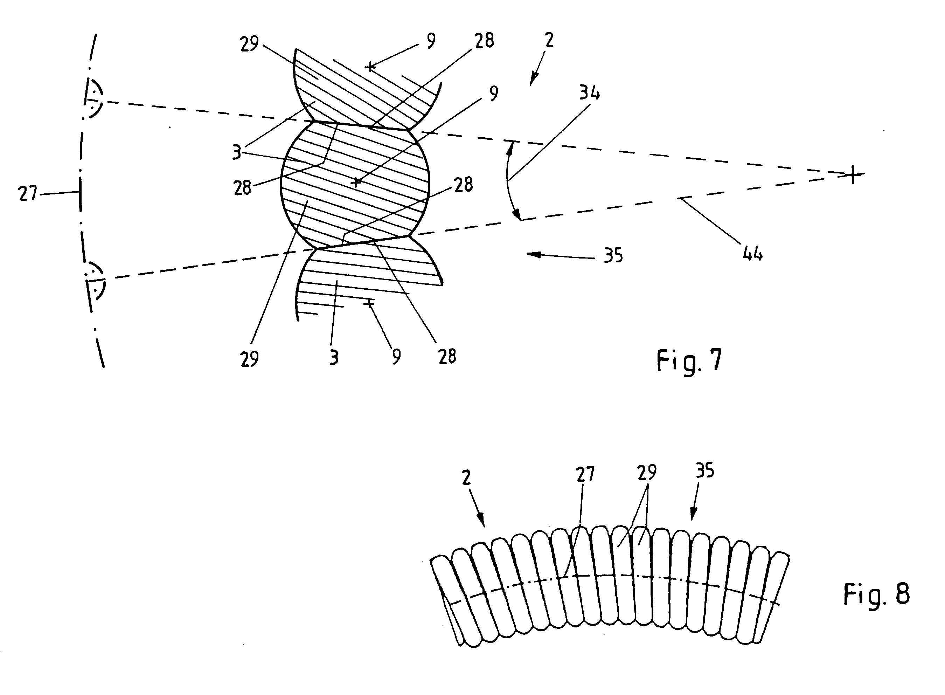

Figur 7 zeigt drei einander benachbarte und über ihre Abflachungen 28 aneinander anliegende Federwindungen 29 einer auf Ihr Blockmaß zusammengedrückten Druckfeder 2, bei der es sich um eine Bogenfeder 35 mit gekrümmter Federachse 27 handelt. Die Anlagebereiche der benachbarten Federwindungen 29 finden sich dabei am Innenradius der Bogenfeder 35. Am hier nicht dargestellten Außenradius weisen die Federwindungen 29 auch bei der auf ihr Blockmaß zusammengedrückten Bogenfeder 35 keinen wechselseitigen Kontakt auf. Am Innenradius sind die Abflachungen 28 benachbarter Federwindungen 29 parallel zueinander und senkrecht zu der Federachse 27 der Bogenfeder 35 ausgerichtet.

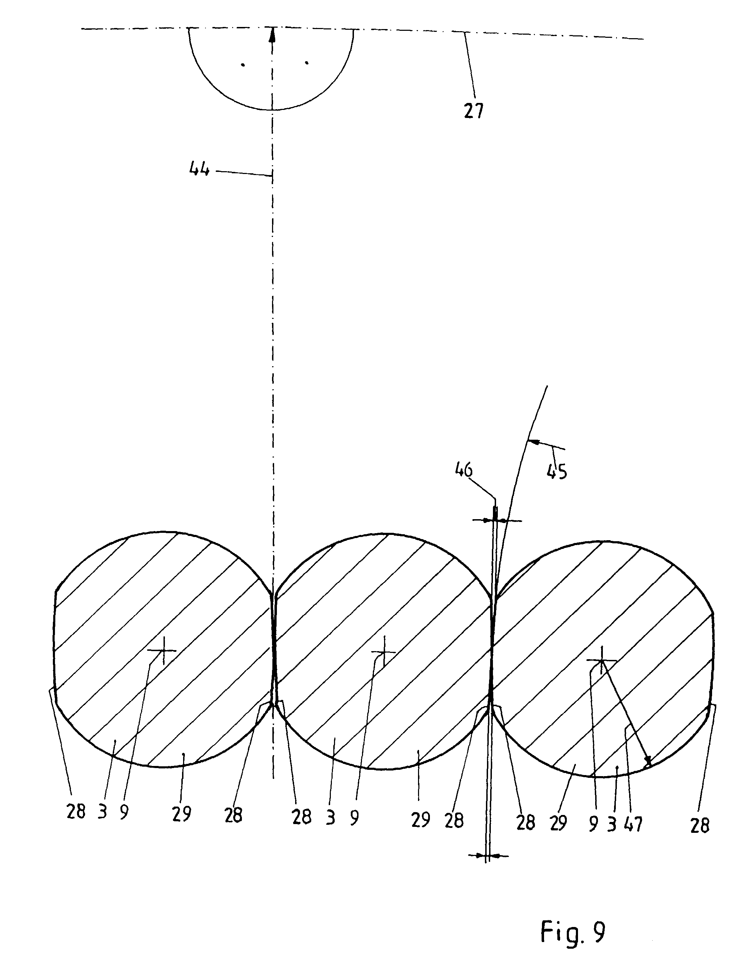

Dies gilt bei der gesamten in Figur 8 dargestellten auf ihr Blockmaß zusammengedrückten Bogenfeder 35 unabhängig von den Ausgangssteigungen der Bogenfeder 35, beispielsweise unabhängig von einer größeren Steigung bei den Mittelwindungen und kleineren Steigungen bei den Endwindungen der Bogenfeder 35. Dabei ist anzumerken, daß der Winkel 34 bei der Darstellung gemäß Figur 7 größer ist, als er den tatsächlichen Verhältnissen in Figur 8 entspricht, um das Prinzip der Erfindung besonders deutlich hervortreten zu lassen.

Die senkrechte Ausrichtung der Abflachungen 28 zu der Federachse 27 ist nur durch Anpassung der Lage der Abflachungen 28 um die Drahtachse 9 relativ zu der Windeeinrichtung 7 gemäß Figur 1 an die jeweilige Steigung der Bogenfeder 35 zu erreichen.

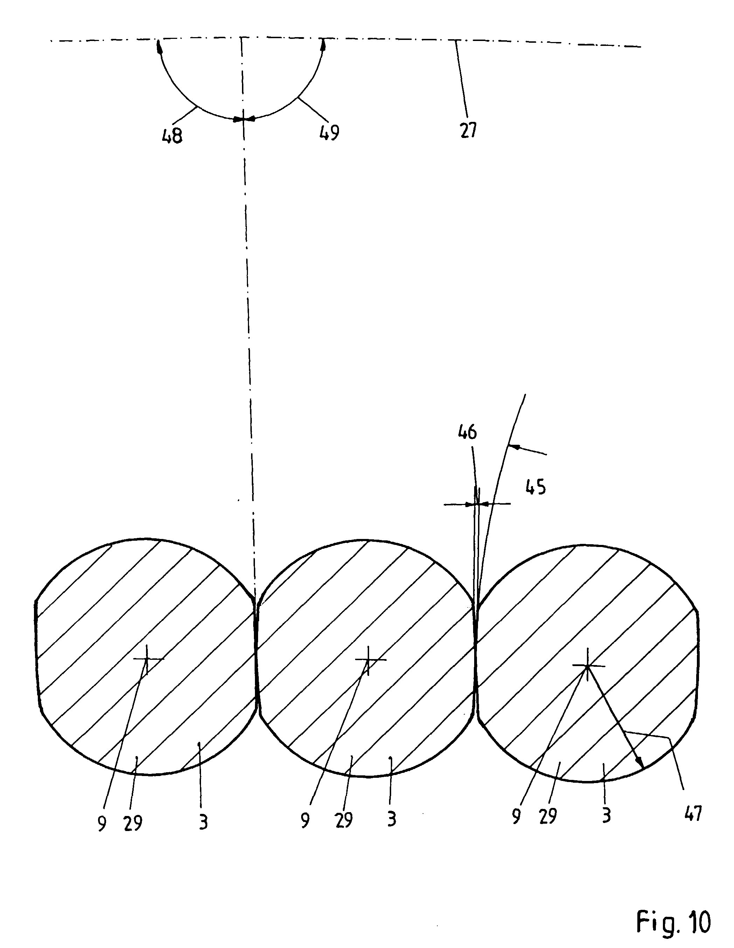

Bei den bislang beschriebenen Druckfedern waren jeweils ebene Abflachungen 28 vorgesehen. In den Figuren 9 und 10 ist eine Ausführungsform wiedergegeben, bei der die Abflachungen 28 eine leichte Konvexe Krümmung mit einem Krümmungsradius 45 aufweisen.

Dieser Krümmungsradius 45 ist im Vergleich zu dem Drahtradius 47 im Bereich des Drahts 3 außerhalb der Abflachungen 28 sehr groß. Der Krümmungsradius 45 ist hier 7,5 mal größer als der Drahtradius 47, damit aber immer noch etwa eine Größenordnung kleiner als der Bogenradius 44 der ausschnittsweise dargestellten Bogenfeder. Dennoch ergeben sich nur kleine Öffnungen 46 im Randbereich der einander gegenüberliegenden Abflachungen 28 benachbarter Federwindungen 29. Bei einem Drahtradius 47 von zwei mm, d. h. einem Drahtdurchmesser von 4 mm, und dem 7,5 mal so großem Krümmungsradius 45 von 15 mm beträgt die Größe der Öffnungen 46 jeweils nur einige hundertstel mm. Durch elastische und/oder plastische Verformung der Konvex gekrümmten Abflachungen 28 wird trotz des Krümmungsradius 45 und unter Verkleinerung der Öffnungen 46 eine flächige Anlage der benachbarten Federwindungen 29 erreicht. Die senkrechte Ausrichtung der Abflachungen 28 zu der Federachse 27 ist trotz des Krümmungsradius 45 eindeutig dadurch definiert, daß die Abflachungen 28 im Mittel senkrecht zu der Federachse 27 ausgerichtet sind. Dies ist gleichbedeutend damit, daß die Anfangs- und Endpunkte der Abflachungen 28 bei dem in Figur 9 gezeigten Querschnitt auf einer senkrecht zu der Federachse 27 verlaufenden Geraden liegen. Allerdings sind bei der Ausführungsform der Druckfeder gemäß den Figuren 9 und 10 kleinere Winkelfehler der Abflachungen 28 bezüglich der Federachse 27 vernachlässigbar. So zeigt Figur 10 einen Winkelfehler der Abflachungen 28 von 2° bezüglich der Federachse 27, d. h. ein Winkel 48 der Abflachungen zu der Federachse 27 beträgt in Figur 10 92° und ein hierzu komplementärer Winkel 49 beträgt 88°. Der sich hieraus im Vergleich zu Figur 9 ergebende Unterschied in den Kontaktbereichen benachbarter Federwindungen 29 ist kaum merklich. Der eigentliche Vorteil der Krümmungen der Abflachungen 28 besteht aber darin, daß das Blockmaß einer entsprechenden Druckfeder durch plastische Verformung der Abflachungen 28 bei gegenseitiger Beaufschlagung in gewissem Umfang verringerbar ist, bis das Blockmaß ein bestimmtes Sollmaß erreicht, oder bis beispielsweise zwei parallel geschaltete Druckfedern exakt das gleiche Blockmaß aufweisen, so daß alle Belastungen der auf ihr Blockmaß zusammengedrückten Druckfedern von beiden Druckfedern gleichmäßig abgetragen werden. Die notwendigen plastischen Verformungen ergeben sich automatisch bei den ersten Beanspruchungen der eingebauten und im Rahmen ihrer Benutzung auf ihr Blockmaß zusammengedrückten Druckfeder.

Die Druckfedern in der Ausführungsform gemäß den Figuren 9 und 10 weisen somit in zweifacher Hinsicht Vorteile bei auftretenden Fertigungstoleranzen auf. Zum einen zeigen Winkelfehler der Abflachungen 28 zur Federachse 27 nur sehr geringe Auswirkungen. So verändert sich beispielsweise auch das Blockmaß der Druckfeder infolge von Winkelfehlern der Abflachungen nur minimal. Zum anderen kann die Druckfeder alle Längenfehler ihres Blockmaßes durch unterschiedlich weit gehende plastische Verformung der gekrümmten Abflachungen ausgleichen.

### BEZUGSZEICHENLISTE

- 1 -: Vorrichtung
- 2 -: Druckfeder
- 3 -: Draht
- 4 -: Prägeeinrichtung
- 5 -: Drahtvorschubeinrichtung
- 6 -: Drahtführungseinrichtung
- 7 -: Windeeinrichtung
- 8 -: Steuerung
- 9 -: Drahtachse
- 10 -: Walze

- 11 -: Walze
- 12 -: Drahtvorschubwalze
- 13 -: Drahtvorschubwalze
- 14 -: Drahtvorschubwalze
- 15 -: Steuersignalleitung
- 16 -: Drahtführungspatrone
- 17 -: Abschneidedorn
- 18 -: Windestift
- 19 -: Windestift
- 20 -: Steuersignalleitung

- 21 -: Steuersignalleitung
- 22 -: Rahmen
- 23 -: Hauptrahmen
- 24 -: Servomotor
- 25 -: Steuersignalleitung
- 26 -: Steuersignalleitung
- 27 -: Federachse
- 28 -: Abflachung
- 29 -: Federwindung
- 30 -: Drehpfeil
- 31 -: Drehpfeil
- 32 -: Endwindung
- 33 -: Mittelwindung
- 34 -: Winkel
- 35 -: Druckfeder
- 36 -: Trennmesser
- 37 -: Steigungswerkzeug
- 38 -: Schwenklager
- 39 -: Drehpfeil
- 40 -: Schwenklager

- 41 -: Drehpfeil
- 42 -: Rahmen
- 43 -: Servomotor
- 44 -: Bogenradius
- 45 -: Krümmungsradius
- 46 -: Öffnung
- 47 -: Drahtradius
- 48 -: Winkel
- 49 -: Winkel

## Patentansprüche

1. Verfahren zur Herstellung einer spiralförmigen Druckfeder (2), wobei ein Draht (3) durch Kaltverformen kontinuierlich mit bezüglich seiner Drahtachse (9) gegenüberliegenden Abflachungen (28) versehen und dann zum Wickeln oder Winden der Druckfeder (2) vorgeschoben wird, wobei beim Vorschieben des Drahts (3) eine definierte Winkellage der Abflachungen (28) des Drahts (3) um die Drahtachse (9) eingehalten wird, so daß die Abflachungen (28) eine definierte Winkellage zur Federachse (27) der Druckfeder (2) einnehmen, wobei die Winkellage der Abflachungen (28) zu der Federachse (27) der Druckfeder (2) so definiert wird, daß beim Zusammendrücken der Druckfeder (2) auf ihr Blockmaß die Abflachungen (28) im Anlagebereich von benachbarten Federwindungen (29) bis auf die verbleibende Blocksteigung der Druckfeder (2) senkrecht zu der Federachse (27) ausgerichtet sind, **dadurch gekennzeichnet**, daß die Winkellage der Abflachungen (28) um die Drahtachse (9) beim Vorschieben des Drahts (3) mit jeder Änderung der Steigung der Druckfeder (2) geändert wird, so daß die Abflachungen (28) beim Zusammendrücken der Druckfeder (2) auf ihr Blockmaß unabhängig von den ursprünglichen Steigungen und bis auf die verbleibende Blocksteigung der Druckfeder (2) senkrecht zu der Federachse (27) ausgerichtet sind.

2. Verfahren nach Anspruch 1, **dadurch gekennzeichnet**, daß die Druckfeder (2) eine Bogenfeder (35) ist, wobei die Federachse (27) der Druckfeder (2) nach dem Wickeln oder Winden dauerhaft gekrümmt wird.

3. Verfahren nach Anspruch 1 oder 2, **dadurch gekennzeichnet**, daß der mit den Abflachungen versehene Draht (3) im Bereich der Abflachungen (28) eine nach außen Konvex gekrümmte Oberfläche mit einem Krümmungsradius aufweist, der mindestens sechsmal so groß ist wie der Außenradius des Drahtes (3) ohne die Abflachungen (28).

4. Vorrichtung (1) für die Herstellung einer spiralförmigen Druckfeder (2), insbesondere gemäß dem Verfahren nach einem der Ansprüche 1 bis 3, mit einer Prägeeinrichtung (4), um einen Draht (3) durch Kaltverformen kontinuierlich mit bezüglich seiner Drahtachse (9) gegenüberliegenden Abflachungen (28) zu versehen, mit einer Drahtvorschubeinrichtung (5), um den Draht zum Wickeln oder Winden der Druckfeder (2) auf eine Wickel- bzw. Windeeinrichtung (7) vorzuschieben, und mit einer Drahtführungseinrichtung (6), um beim Vorschieben des Drahts (3) eine definierte Winkellage der Abflachungen (28) des Drahts (3) um die Drahtachse (9) relativ zu der Wickel- bzw. Windeeinrichtung (7) einzuhalten, wobei die Wickel- bzw. Windeeinrichtung (7) mit einer Steuerung (8) verstellbar ist, um bei der Herstellung einer einzelnen Druckfeder (2) unterschiedliche Steigungen entlang deren Federachse (27) einzustellen, **dadurch gekennzeichnet**, daß die Prägeeinrichtung (4), die Drahtvorschubeinrichtung (5) und die Drahtführungseinrichtung (6) relativ zu der Wickel- bzw. Windeeinrichtung (7) gemeinsam um die Drahtachse (9) verschwenkbar sind, wobei ihre Winkellage um die Drahtachse (9) mit der Steuerung in Abhängigkeit von der an der Wickel- bzw. Windeeinrichtung (7) eingestellten Steigung verstellbar ist.

5. Vorrichtung nach Anspruch 4, **dadurch gekennzeichnet**, daß die Drahtführungseinrichtung (6) mindestens eine mit ihrer freien Durchgangsöffnung auf den Querschnitt des abgeflachten Drahts (3) abgestimmte Drahtführungspatrone (16) aufweist, aus der der Draht (3) in die Wickel- bzw. Windeeinrichtung (7) eintritt.

6. Vorrichtung nach Anspruch 5, **dadurch gekennzeichnet**, daß die Drahtvorschubeinrichtung (5) mehrere Paare von Drahtvorschubwalzen (12 bis 14) aufweist, wobei zwischen den Paaren jeweils eine weitere Drahtführungspatrone (16) angeordnet ist.

7. Vorrichtung nach einem der Ansprüche 4 bis 6, **dadurch gekennzeichnet**, daß die Prägeeinrichtung (4) vier paarweise überkreuz angeordnete scheibenförmige Walzen (10 und 11) aufweist.

8. Vorrichtung nach Anspruch 7, **dadurch gekennzeichnet**, daß die Walzen (10 und 11) als Schleppwalzen ohne eigenen Antrieb ausgebildet sind.

## Claims

1. A method of manufacturing a spiral compression spring (2), in which a wire (3) is continuously provided with flattenings (28) on opposite sides of its wire axis (9) by means of cold forming and then advanced for winding or coiling the compression spring (2), in advancing the wire (3) a defined angular position of the flattenings (28) of the wire around the wire axis (9) being kept so that the flattenings (28) enter a defined angular position with regard to the spring axis (27) of the compression spring (2), the angular position of the flattenings (28) being defined with regard to the spring axis (27) of the compression spring (2) in such a way that, upon compressing the compression spring (2) down to its block length, the flattenings (28) within the contact area of adjacent spring coils (29) are orientated at right angles with regard to the spring axis (27) except for the remaining block inclination of the compression spring (2), **characterized in that** in advancing the wire (3) the angular position of the flattenings (28) around the wire axis (9) is changed with every change of the inclination of the compression spring (2) in such a way that, upon compressing the compression spring (2) down to its block length, the flattenings (28) are orientated at right angles with regard to the spring axis (27) independent of the original inclinations and except for the remaining block inclination of the compression spring (2).

2. The method of claim 1 **characterized in that** the compression spring (2) is an arcuate spring (35), the spring axis of the compression spring (2) being bent to last after the step of winding or coiling.

3. The method of claim 1 or 2 **characterized in that** the wire (3) provided with the flattenings (28) has, within the region of the flattenings (28), an outwardly convexly curved surface showing a radius of curvature which is at least six times as big as the outer radius of the wire (3) without the flattenings (28).

4. A device (1) for the manufacture of a spiral compression spring (2), particularly according to the method of any of the claims 1 to 3, comprising a flattening equipment (4) for continuously providing a wire (3) with flattenings (28) on opposite sides of its wire axis (9) by means of cold forming 3, a wire advancing equipment (5) for advancing the wire towards a winding or coiling equipment (7) for winding or coiling the compression spring (2), and a wire guiding equipment (6) for keeping a defined angular position of the flattenings (28) of the wire (3) around the wire axis (9) with regard to the winding or coiling equipment (7) in advancing the wire (3), the winding or coiling equipment (7) being adjustable by means of a control (8) for adjusting to different inclinations along the spring axis (27) during manufacture of a single compression spring (2) **characterized in that** the flattening equipment (4), the wire advancing equipment (5), and the wire guiding equipment (6) are together turnable about the wire axis (9) with regard to the winding or coiling equipment (7), their angular position around the wire axis (9) being adjustable by means of the control dependent of the inclination adjusted at the winding or coiling equipment (7).

5. The device of claim 4 **characterized in that** the wire guiding equipment (6) comprises at least one wire guiding cartridge (16) having a clear through whole which is adapted to the cross sectional area of the flattened wire (3), the wire (3) entering into the winding or coiling equipment (7) out of the guiding cartridge (16).

6. The device of claim 5 **characterized in that** the wire advancing equipment (5) comprises several pairs of wire advancing rollers (12 to 14), a further wire guiding cartridge (16) being placed between every two of the pairs.

7. The device of any of the claims 4 to 6 **characterized in that** the flattening equipment (4) has four disc shaped rollers (10 and 11) arranged in crossing pairs.

8. The device of claim 7 **characterized in that** the rollers (10 and 11) are provided as towed rollers having no own drive.

## Revendications

1. Procédé de fabrication d'un ressort de compression (2) hélicoïdal, dans lequel un fil métallique (3) est pourvu en continu, par déformation à froid, de méplats (28) opposés par rapport à son axe, et est ensuite avancé vers l'avant pour enrouler ou tordre le ressort de compression (2), dans lequel une position angulaire définie des méplats (28) du fil métallique (3) est respectée pendant l'avance du fil métallique (3), ce qui fait que les méplats (28) prennent une position angulaire définie par rapport à l'axe (27) du ressort de compression (2), la position angulaire des méplats (28) par rapport à l'axe (27) du ressort de compression (2) étant définie de manière que lorsque le ressort de compression (2) est comprimé à la dimension du bloc, les méplats (28), dans la zone d'application de spires (29) adjacentes du ressort, hormis le pas de bloc résiduel du ressort de compression (2), sont orientés perpendiculairement à l'axe (27) du ressort, caractérisé en ce que la position angulaire des méplats (28) autour de l'axe (9) du fil métallique est modifiée à chaque variation du pas du ressort de compression (2), lors de l'avance du fil métallique (3), ce qui fait que les méplats (28) sont orientés perpendiculairement à l'axe (27) du ressort, lorsque le ressort de compression (2) est comprimé à la dimension du bloc, indépendamment des pas initiaux et hormis le pas résiduel du bloc du ressort de compression (2).

2. Procédé selon la revendication 1, caractérisé en ce que le ressort de compression (2) est un ressort en arc (35), l'axe (27) du ressort de compression (2) étant cintré durablement après enroulement ou torsion.

3. Procédé selon la revendication 1 ou 2, caractérisé en ce que le fil métallique (3), pourvu des méplats, présente, dans la région des méplats (28), une surface convexe, courbée vers l'extérieur, avec un rayon de courbure qui est au moins six fois supérieur au rayon extérieur du fil métallique (3) sans les méplats (28).

4. Dispositif (1) pour la fabrication d'un ressort de compression (2) hélicoïdal, notamment selon le procédé suivant l'une des revendications 1 à 3, comportant un dispositif de matriçage (4) destiné à prévoir en continu sur un fil métallique (3), par déformation à froid, des méplats (28) opposés par rapport à son axe (9), comportant un dispositif d'avance de fil (5) destiné à faire avancer le fil métallique sur un dispositif d'enroulement ou de torsion (7), pour enrouler ou tordre le ressort de compression (2), et comportant un dispositif de guidage de fil (6) pour respecter une position angulaire définie des méplats (28) du fil métallique (3) autour de son axe (9) par rapport au dispositif d'enroulement ou de torsion (7), pendant l'avance du fil métallique (3), le dispositif d'enroulement ou de torsion (7) étant réglable au moyen d'une commande (8), afin de régler différents pas le long de l'axe (27) du ressort, pendant la réalisation d'un ressort de compression (2) individuel, caractérisé en ce que le dispositif de matriçage (4) le dispositif d'avance de fil (5) et le dispositif de guidage de fil (6) peuvent pivoter ensemble autour de l'axe (9) du fil métallique, par rapport au dispositif d'enroulement ou de torsion (7), leur position angulaire autour de l'axe (9) du fil pouvant être réglée au moyen de la commande, en fonction du pas réglé sur le dispositif d'enroulement ou de torsion (7).

5. Dispositif selon la revendication 4, caractérisé en ce que le dispositif de guidage de fil (6) présente au moins une cartouche de guidage de fil (16), dont la libre ouverture de passage est adaptée à la section du fil métallique (3) aplati et à travers laquelle le fil métallique (3) entre dans le dispositif d'enroulement ou de torsion (7).

6. Dispositif selon la revendication 5, caractérisé en ce que le dispositif d'avance de fil (5) présente plusieurs paires de rouleaux d'avance de fil (12 à 14), une autre cartouche de guidage de fil (16) étant disposée entre les paires.

7. Dispositif selon l'une des revendications 4 à 6, caractérisé en ce que le dispositif de matriçage (4) comporte quatre rouleaux (10 et 11) en forme de disques, disposés deux par deux en croix.

8. Dispositif selon la revendication 7, caractérisé en ce que les rouleaux (10 et 11) sont conformés en rouleaux qui ne disposent pas de leur propre entraînement.
